(19) Europäisches Patentamt
European Patent Office
Office européen des brevets

(11) EP 4 746 080 A1

(12) EUROPEAN PATENT APPLICATION

(43) Date of publication:
20.05.2026 Bulletin 2026/21

(21) Application number: 25206227.8

(22) Date of filing: 02.10.2025

(51) International Patent Classification (IPC):
H01M 4/66 (2006.01)

(52) Cooperative Patent Classification (CPC):
H01M 4/661; H01M 4/667; H01M 4/668

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 22.10.2024 KR 20240144527

(71) Applicant: SAMSUNG SDI CO., LTD.
Yongin-si, Gyeonggi-do 17084 (KR)

(72) Inventor: KIM, Hyunwoo
17084 Yongin-si, Gyeonggi-do (KR)

(74) Representative: Michalski Hüttermann & Partner
Patentanwälte mbB
Kaistraße 16A
40221 Düsseldorf (DE)

(54) COMPOSITE SUBSTRATE FOR RECHARGEABLE LITHIUM BATTERY AND RECHARGEABLE LITHIUM BATTERY INCLUDING THE SAME

(57) Disclosed are composite substrates and rechargeable lithium batteries. The composite substrate includes a first metal layer, a second metal layer, and a magnetic layer between the first metal layer and the second metal layer. A ratio of a thickness of the magnetic layer to a thickness of the composite substrate is in a range of $\geq 0.01$ to $\leq 0.9$. The magnetic layer includes a magnetic material and a polymeric material. The magnetic material includes at least one of neodymium (Nd), neodymium-iron-boron (NdFeB), ferrite, aluminum-nickel-cobalt (AlNiCo), samarium-cobalt (SmCo), and any combination thereof. A ratio of a weight of the magnetic material to a total weight of the magnetic layer is in a range of $\geq 10$ wt% to $\leq 96$ wt%.

FIG. 7

**Description**

CROSS-REFERENCE TO RELATED APPLICATION

This application claims priority under 35 U.S.C § 119 to Korean Patent Application No. 10-2024-0144527 filed on October 22, 2024 in the Korean Intellectual Property Office, the disclosure of which is hereby incorporated by reference in its entirety.

BACKGROUND

The present disclosure relates to a composite substrate for a rechargeable lithium battery, and a rechargeable lithium battery including the composite substrate.

With increasing presence of battery-using electronic devices such as, e.g., mobile phones, laptop computers, and electric vehicles, there is increasing demand for rechargeable batteries with high energy density and high capacity. Therefore, improving performance of rechargeable lithium batteries may be advantageous.

A rechargeable lithium battery includes a positive electrode, a negative electrode, and an electrolyte, the positive and negative electrodes including an active material in which intercalation and deintercalation are possible, and the rechargeable lithium battery generates electrical energy caused by oxidation and reduction reactions when lithium ions are intercalated and deintercalated.

SUMMARY

An example embodiment of the present disclosure includes a composite substrate for a rechargeable lithium battery capable of reducing or preventing slippage between members in fabrication process and improving battery performance.

An example embodiment of the present disclosure includes a battery including the composite substrate for a rechargeable lithium battery.

According to an example embodiment of the present disclosure, a composite substrate for a rechargeable lithium battery may include a first metal layer, a second metal layer, and a magnetic layer between the first metal layer and the second metal layer. A ratio of a thickness of the magnetic layer to a thickness of the composite substrate may be in a range of $\geq 0.01$ to $\leq 0.9$. The magnetic layer may include a magnetic material and a polymeric material. The magnetic material may include at least one of neodymium (Nd), neodymium-iron-boron (NdFeB), ferrite, aluminum-nickel-cobalt (AlNiCo), samarium-cobalt (SmCo), and any combination thereof. A ratio of a weight of the magnetic material to a total weight of the magnetic layer may be in a range of $\geq 10$ wt% to $\leq 96$ wt%.

According to an example embodiment of the present disclosure, a composite substrate for a rechargeable lithium battery may include a first metal layer, a second metal layer, and a magnetic layer between the first metal layer and the second metal layer. The magnetic layer may include a magnetic region and a polymeric region. The magnetic region may include a magnetic material and a polymeric material. A ratio of a weight of the magnetic material in the magnetic region to a total weight of the magnetic region may be equal to or greater than $\geq 50$ wt%. The magnetic material may include at least one of neodymium (Nd), neodymium-iron-boron (NdFeB), ferrite, aluminum-nickel-cobalt (AlNiCo), samarium-cobalt (SmCo), and any combination thereof.

According to an example embodiment of the present disclosure, a rechargeable lithium battery may include a positive electrode active material layer; an electrolyte; a negative electrode active material layer; and the composite substrate as discussed above.

BRIEF DESCRIPTION OF DRAWINGS

FIG. 1 illustrates a simplified conceptual diagram showing a rechargeable lithium battery according to an example embodiment of the present disclosure.

FIGS. 2 to 5 illustrate simplified diagrams showing a rechargeable lithium battery according to an example embodiment of the present disclosure, with FIG. 2 showing a cylindrical battery, FIG. 3 showing a prismatic battery, and FIGS. 4 and 5 showing pouch-type batteries.

FIG. 6 illustrates a cross-sectional view showing a rechargeable lithium battery according to an example embodiment of the present disclosure.

FIG. 7 illustrates a cross-sectional view showing a composite substrate according to an example embodiment of the present disclosure.

FIG. 8 illustrates a perspective view showing a magnetic layer of a composite substrate according to an example embodiment of the present disclosure.

FIG. 9 illustrates a diagram showing particle shapes of a magnetic material according to an example embodiment of the present disclosure.

FIG. 10 illustrates a perspective view showing a magnetic layer including a magnetic region according to an example embodiment of the present disclosure.

FIGS. 11A to 11C illustrate diagrams showing various examples of a magnetic region in a magnetic layer.

FIG. 12 illustrates a diagram showing a stacked state of unit pouch batteries according to an example embodiment of the present disclosure.

FIG. 13 illustrates an enlarged view showing section "M" of FIG. 12.

FIGS. 14 and 15 illustrate diagrams showing a comparative example of a bi-cell not in accordance with the present disclosure.

FIGS. 16 and 17 illustrate diagrams showing a unit pouch battery not in accordance with the present disclosure.

## DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element or intervening elements may be present between therebetween. In the drawings, thicknesses of some components may be exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B" "B but not A," and "A and B." The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter $(D_{50})$ where a cumulative volume is about 50 volume % in a particle size distribution. The average particle diameter $(D_{50})$ may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter $(D_{50})$ value may be obtained through a calculation. Dissimilarly, a laser scattering method may be utilized to measure the average particle diameter $(D_{50})$. In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter $(D_{50})$ is calculated in the 50% standard of particle diameter distribution in the measurement device.

When the terms "about" or "substantially" are used in this specification in connection with a numerical value, it is intended that the associated numerical value include a tolerance of $\pm10\%$ around the stated numerical value. When ranges are specified, the range includes all values therebetween such as increments of 0.1%.

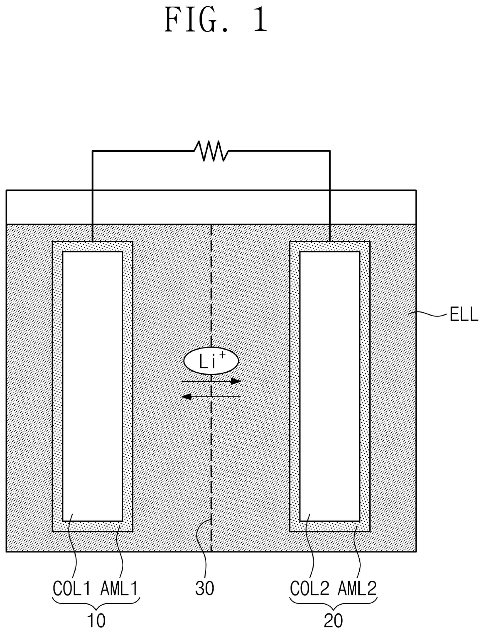

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

## Positive Electrode

The positive electrode 10 for the rechargeable lithium battery may include a current collector COL1 and a positive electrode active material layer AML1 formed on the current collector COL1. The positive electrode active material layer AML1 may include a positive electrode active material, and may further include a binder and/or a conductive material.

An amount of the positive electrode active material in the positive electrode active material layer AML1 may range from $\geq 90$ wt% to $\leq 99.5$ wt% relative to 100 wt% of the positive electrode active material layer AML1. Amounts of the binder and the conductive material may each be in a range of $\geq 0.5$ wt% to $\leq 5$ wt% relative to 100 wt% of the positive electrode active material layer AML1.

The binder may be configured to improve attachment of positive electrode active material particles to each other, and also to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be included to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, ketjen black, carbon fiber, carbon nano-fiber, and carbon nano-tube; a metal-based material in the form of a metal powder or metal fiber including one or more of copper, nickel, aluminum, and silver; a conductive polymer such as a polyphenylene derivative; or a mixture thereof.

Aluminum (Al) may be included as the current collector COL1, but the present disclosure is not limited thereto.

## Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and any combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or any combination thereof.

For example, the positive electrode active material may include a compound expressed by one of chemical formulae below. $Li_aA_{1-b}X_bO_{2-c}D_c$ (where $0.90 \leq a \leq 1.8$, $0 \leq b \leq 0.5$, and $0 < c \leq 0.05$); $Li_aMn_{2-b}X_bO_{4-c}D_c$ (where $0.90 \leq a \leq 1.8$, $0 \leq b \leq 0.5$, and $0 < c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_dO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); and $Li_aFePO_4$ (where $0.90 \leq a \leq 1.8$).

In the chemical formulae above, A may be or include at least one of Ni, Co, Mn, or any combination thereof, X may be or include at least one of Al, Ni, Co, Mn, Cr, Fe, Mg, Sr, V, a rare-earth element, or any combination thereof, D may be or include at least one of O, F, S, P, or any combination thereof, G may be or include at least one of Al, Cr, Mn, Fe, Mg, La, Ce, Sr, V, or any combination thereof, and $L^1$ may be or include at least one of Mn, Al, or any combination thereof.

For example, the positive electrode active material may be or include a high-nickel-based positive electrode active material having a nickel amount that is equal to or greater than $\geq 80$ mol%, 85 mol%, 90 mol%, 91 mol%, or 94 mol%, and equal to or less than 99 mol% relative to 100 mol% of metal devoid of lithium in the lithium transition metal composite oxide. The high-nickel-based positive electrode active material may achieve high capacity, and thus may be applied to a high-capacity and high-density rechargeable lithium battery.

## Negative Electrode

The negative electrode 20 for the rechargeable lithium battery may include a current collector COL2 and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material in a range of ≥ 90 wt% to ≤ 99 wt%, a binder in a range of ≥ 0.5 wt% to ≤ 5 wt%, and a conductive material in a range of ≥ 0 wt% to ≤ 5 wt%.

The binder may be configured to improve attachment of negative electrode active material particles to each other, and to improve attachment of the negative electrode active material to the current collector COL2. The binder may include at least one of a non-aqueous binder, an aqueous binder, a dry binder, or any combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or any combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or any combination thereof.

When an aqueous binder is included as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or any combination thereof.

The conductive material may be included to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, ketjen black, carbon fiber, carbon nano-fiber, and carbon nano-tube; a metal-based material in the form of a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or any combination thereof.

## Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or a transition metal oxide.

The material that can reversibly intercalate and deintercalate lithium ions may include a carbon-based negative electrode active material, for example, crystalline carbon, amorphous carbon, or any combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOx (where 0<x<2), Si-Q alloy (where Q is or includes at least one of alkali metal, alkaline earth metal, Group 13 element, Group 14 element (except for Si), Group 15 element, Group 16 element, transition metal, a rare-earth element, or any combination thereof), or any combination thereof. The Sn-based negative electrode active material may include at least one of Sn, SnO$_2$, a Sn-based alloy, any combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be included in combination with a carbon-based negative electrode active material.

## Separator

Based on a type of the rechargeable lithium battery, the separator 30 may be present between the positive electrode 10 and the negative electrode 20. The separator 30 may include one or more of polyethylene, polypropylene, and polyvinylidene fluoride, and may have a multi-layered separator thereof such as at least one of a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one surface, or on opposite surfaces, of the porous substrate, the coating layer including an organic material, an inorganic material, or any combination thereof.

The porous substrate may be or include a polymer layer including one of polyolefin such as polyethylene and polypropylene, polyester such as at least one of polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon™, and polytetrafluoroethylene, or may be a copolymer or mixture including two or more of the materials discussed above.

The organic material may include a polyvinylidenefluoride-based copolymer or a (meth)acrylic copolymer.

The inorganic material may include an inorganic particle such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or any combination thereof, but the present disclosure is not limited thereto.

The organic material and the inorganic material may be mixed in one coating layer, or may be present as a stack of a coating layer including the organic material, and a coating layer including an inorganic material.

## Electrolyte

The electrolyte ELL for a rechargeable lithium battery may include a non-aqueous organic solvent and a lithium salt.

The non-aqueous organic solvent may be configured as a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or any combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol, and the aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be included alone or in a mixture of two or more solvents.

In addition, when a carbonate-based solvent is included, a cyclic carbonate and a linear carbonate may be mixed, and the cyclic carbonate and the linear carbonate may be mixed in a volume ratio in a range of ≥ 1:1 to ≤ 1:9.

The lithium salt may be or include a material that dissolves in the non-aqueous organic solvent to constitute as a supply source of lithium ions in a battery, and contributes to enabling a basic operation of a rechargeable lithium battery and in promoting the movement of lithium ions between positive and negative electrodes. The lithium salt may include, for example, at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

## Rechargeable Lithium Battery

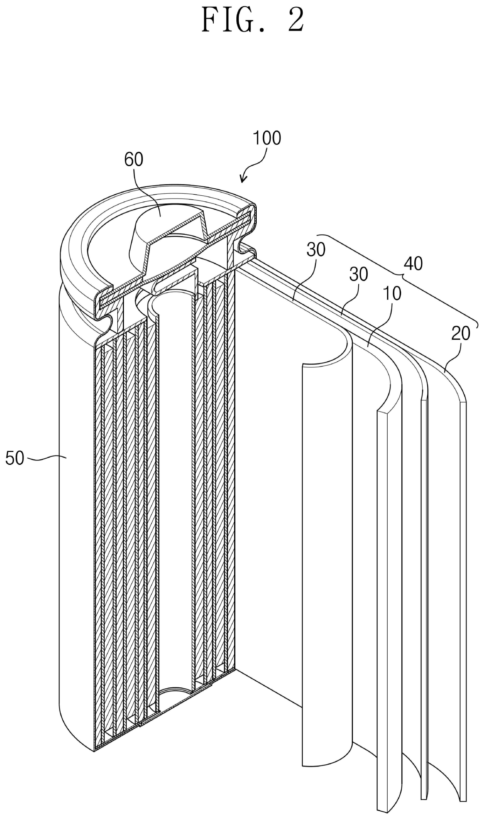

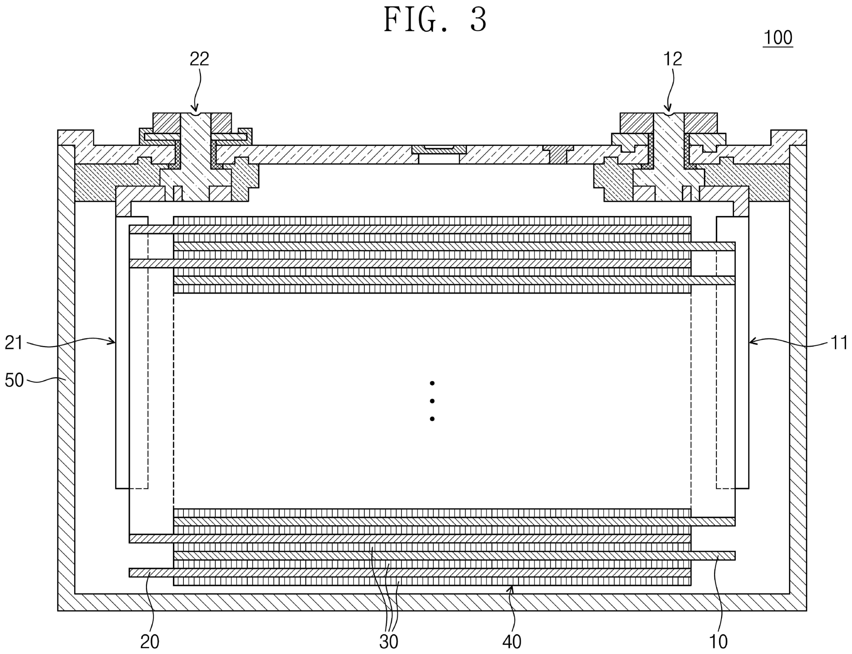

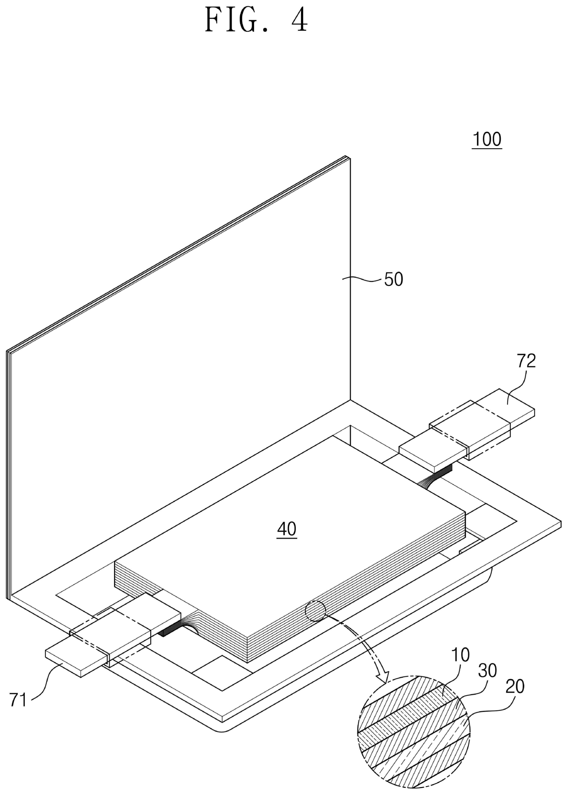

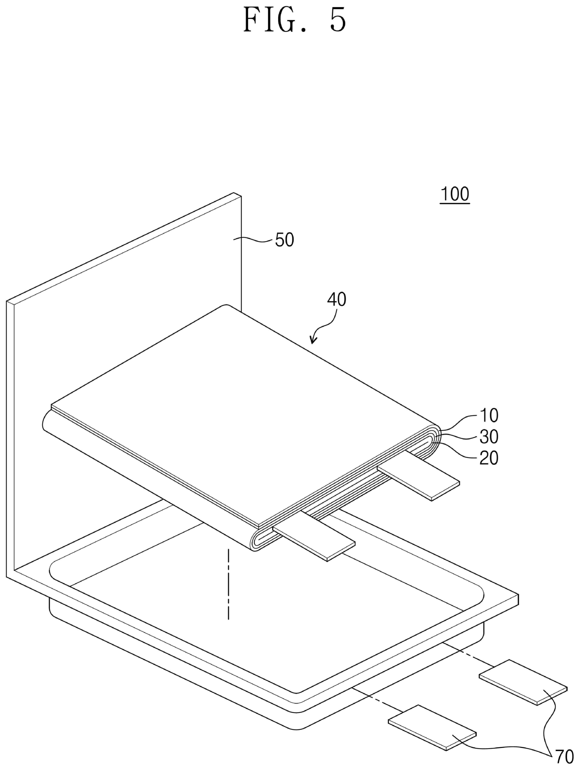

Based on a shape of a rechargeable lithium battery, the rechargeable lithium battery may be classified into cylindrical, prismatic, pouch, and coin types. FIGS. 2 to 5 illustrate simplified diagrams showing a rechargeable lithium battery according to an example embodiment of the present disclosure, with FIG. 2 showing a cylindrical battery, FIG. 3 showing a prismatic battery, and FIGS. 4 and 5 showing pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40.

The following describes in detail some example embodiments of the present disclosure. In the example embodiment that follows, a detailed description of technical features repetitive to those discussed above with reference to FIGS. 1 to 5 is omitted, and a difference thereof is discussed in detail.

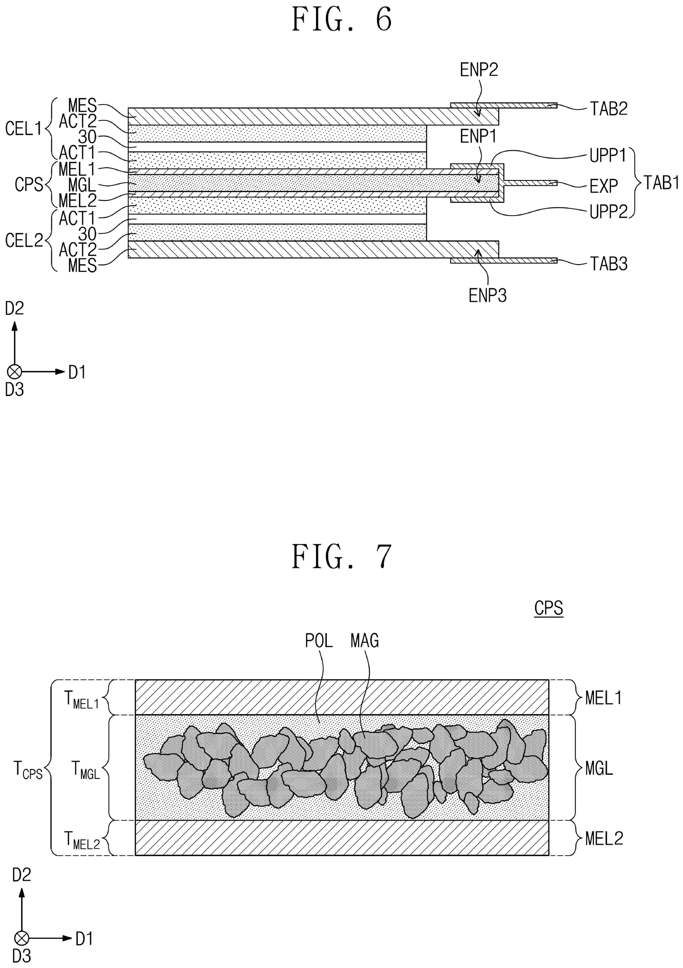

FIG. 6 illustrates a cross-sectional view showing a rechargeable lithium battery according to an example embodiment of the present disclosure. Referring to FIG. 6, a single bi-cell may include a composite substrate CPS, a first battery cell CEL1 on one surface of the composite substrate CPS, and a second battery cell CEL2 on another surface of the composite substrate CPS.

A single bi-cell (BCL) may be constituted by the first battery cell CEL1, the second battery cell CEL2, and the composite substrate CPS of FIG. 6. The first battery cell CEL1, the second battery cell CEL2, and the composite substrate CPS of FIG. 6 may constitute or correspond to the electrode assembly 40 discussed above with reference to FIGS. 2 to 5.

Each of, or at least one of, the first battery cell CEL1 and the second battery cell CEL2 may include a first active material layer ACT1, a separator 30, a second active material layer ACT2, and a metal substrate MES. The first active material layer ACT1 may be provided on the composite substrate CPS. The second active material layer ACT2 may be spaced apart from the first active material layer ACT1 across the separator 30. The metal substrate MES may be provided on the second active material layer ACT2.

The first active material layer ACT1 may be or include one of the positive electrode active material layer AML1 and the negative electrode active material layer AML2 that are discussed above with reference to FIG. 1. The second active material layer ACT2 may be or include the other of the positive electrode active material layer AML1 and the negative electrode active material layer AML2 that are discussed above with reference to FIG. 1. In an example embodiment of the present disclosure, the first active material layer ACT1 may be or include the positive electrode active material layer AML1, and the second active material layer ACT2 may be or include the negative electrode active material layer AML2. The metal substrate MES may be or include the current collector COL1 or COL2 discussed above with reference to FIG. 1, or the composite substrate CPS according to the present disclosure.

The composite substrate CPS may have a first end portion ENP1 at one end thereof. The metal substrate MES of the first battery cell CEL1 may include a second end portion ENP2 at one end thereof. The metal substrate MES of the second battery cell CEL2 may include a third end portion ENP3 at one end thereof.

A first tab TAB1 may be provided on the first end portion ENP1 of the composite substrate CPS. The first tab TAB1 may include a first connection portion UPP1, a second connection portion UPP2, and an extension portion EXP. The first connection portion UPP1 may be in contact with the first metal layer MEL1 of the composite substrate CPS. The second connection portion UPP2 may be in contact with the second metal layer MEL2 of the composite substrate CPS. The extension portion EXP may connect the first connection portion UPP1 and the second connection portion UPP2 to each other. The extension portion EXP may substantially horizontally extend in a first direction D1 from the first end portion ENP1.

The first tab TAB1 may electrically connect the first metal layer MEL1 to the second metal layer MEL2 of the composite substrate CPS. The first tab TAB1 may be configured to transmit a voltage in common to the first metal layer MEL1 and the second metal layer MEL2 of the composite substrate CPS.

A second tab TAB2 may be provided on the second end portion ENP2 of the metal substrate MES. The second tab TAB2 may be configured to transmit a voltage to the metal substrate MES of the first battery cell CEL1. A third tab TAB3 may be provided on the third end portion ENP3 of the metal substrate MES. The third tab TAB3 may be configured to transmit a voltage to the metal substrate MES of the second battery cell CEL2.

The first tab TAB1 may constitute one of the positive and negative electrode tabs (or positive and negative electrode lead tabs) discussed above with reference to FIGS. 2 to 5. The second and third tabs TAB2 and TAB3 may constitute the other of the positive and negative electrode tabs (or positive and negative electrode lead tabs) discussed above with reference to FIGS. 2 to 5.

FIG. 7 illustrates a cross-sectional view showing a composite substrate according to an example embodiment of the present disclosure. Referring to FIG. 7, the composite substrate CPS may include a magnetic layer MGL, and may also include a first metal layer MEL1 and a second metal layer MEL2 that are correspondingly provided on opposite surfaces of the magnetic layer MGL. The first metal layer MEL1 of the composite substrate CPS may be in contact with the first active material layer ACT1 of the first battery cell CEL1. The second metal layer MEL2 of the composite substrate CPS may be in contact with the first active material layer ACT1 of the second battery cell CEL2. Each of, or at least one of, the first and second metal layers MEL1 and MEL2 of the composite substrate CPS may correspond to the current collector COL1 or COL2 discussed above with reference to FIG. 1.

The magnetic layer MGL may include a magnetic material MAG and a polymeric material POL. The magnetic material MAG may be or include a material that is distinguished from a magnetizable material. The magnetic material MAG may maintain strong magnetization even without an external field while possessing its own north and south poles. For example, the magnetic material MAG may include at least one of neodymium (Nd), neodymium-iron-boron (NdFeB), ferrite, aluminum-nickel-cobalt (AlNiCo), samarium-cobalt (SmCo), and any combination thereof. The composite substrate CPS according to the present disclosure may contain the magnetic material MAG to constitute a strong magnet.

However, the magnetizable material may not be inherently magnetic, and may respond only when an external magnetic field is applied. The magnetizable material may be or include, for example, iron, nickel, cobalt, and iron oxide. When the magnetizable material is substituted for the magnetic material MAG according to the present disclosure, the composite substrate CPS may not constitute a magnet.

The polymeric material POL may be formed of or include any suitable material as long as the material does not interfere with the magnetic field of the magnetic material MAG. For example, the polymeric material POL may include at least one of polyethylene (PE), polypropylene (PP), polyvinylidene chloride (PVDC), polyethylene terephthalate (PET), or any combination thereof.

Each of, or at least one of, the first and second metal layers MEL1 and MEL2 may include at least one of aluminum, aluminum alloy, copper, copper alloy, nickel, nickel alloy, titanium, titanium alloy, iron, iron alloy, silver, and silver alloy.

A ratio ($T_{MGL}/T_{CPS}$) of a thickness $T_{MGL}$ of the magnetic layer MGL to a thickness $T_{CPS}$ of the composite substrate CPS may range from $\geq 0.01$ to $\leq 0.9$, from $\geq 0.3$ to $\leq 0.9$, from $\geq 0.5$ to $\leq 0.9$, or from $\geq 0.7$ to $\leq 0.9$.

In an example embodiment of the present disclosure, the thickness $T_{CPS}$ of the composite substrate CPS may range from $\geq 10$ $\mu$m to $\leq 500$ $\mu$m, from $\geq 10$ $\mu$m to $\leq 300$ $\mu$m, from $\geq 10$ $\mu$m to $\leq 100$ $\mu$m, or from $\geq 10$ $\mu$m to $\leq 30$ $\mu$m. Each of, or at least one of, thicknesses $T_{MEL1}$ and $T_{MEL2}$ of the first and second metal layers MEL1 and MEL2 may range from $\geq 200$ nm to $\leq 25$ $\mu$m, from $\geq 200$ nm to $\leq 10$ $\mu$m, or from $\geq 200$ nm to $\leq 5$ $\mu$m. The thickness $T_{MGL}$ of the magnetic layer MGL may range from $\geq 1$ $\mu$m to $\leq 450$ $\mu$m, from $\geq 1$ $\mu$m to $\leq 100$ $\mu$m, or from $\geq 5$ $\mu$m to $\leq 15$ $\mu$m. The thickness $T_{MGL}$ of the magnetic layer MGL may be greater than the thicknesses $T_{MEL1}$ and $T_{MEL2}$ of the first and second metal layers MEL1 and MEL2.

When the thickness ratio ($T_{MGL}/T_{CPS}$) falls within the range above, and/or when the thicknesses $T_{CPS}$, $T_{MEL1}$, $T_{MEL2}$, and $T_{MGL}$ fall within the ranges above, the composite substrate CPS may effectively be configured as a magnet. When the first and second metal layers MEL1 and MEL2 are excessively or substantially thicker than the magnetic layer MGL, the first and second metal layers MEL1 and MEL2 may block or reduce the magnetic field of the magnetic material MAG.

A ratio ($W_{MGA}/W_{MGL}$) of a weight $W_{MGA}$ of the magnetic material MAG included in the magnetic layer MGL to a total weight $W_{MGL}$ of the magnetic layer MGL may range from $\geq 10$ wt% to $\leq 96$ wt%, from $\geq 50$ wt% to $\leq 96$ wt%, or from $\geq 85$ wt% to $\leq 96$ wt%.

The composite substrate CPS may have a magnetic flux density in a range of $\geq 0.3$ T to $\leq 3$ T, $\geq 0.5$ T to $\leq 2.5$ T, or $\geq 0.5$ T to $\leq 1.5$ T. The magnetic flux density may be measured with a measurement instrument such as, e.g., a hall effect sensor, a vibrating sample magnetometer (VSM), a gaussmeter, and a SQUID magnetometer. The magnetic flux density may be measured at room temperature (25°C). When a gaussmeter or a hall effect sensor is used, the magnetic flux density may be obtained at a distance in a range of $\geq 1$ mm to $\leq 10$ cm from an outer surface of the composite substrate CPS.

When the weight ratio ($W_{MAG}/W_{MGL}$) falls within the range above, and/or when the magnetic flux density falls within the range above, the magnetic field of the magnetic material MAG may be improved or optimized to improve battery performance. For example, the magnetic field may improve electron conductivity and ion distribution. As a result, lithium precipitation may be reduced, and a capacity retention rate may be improved.

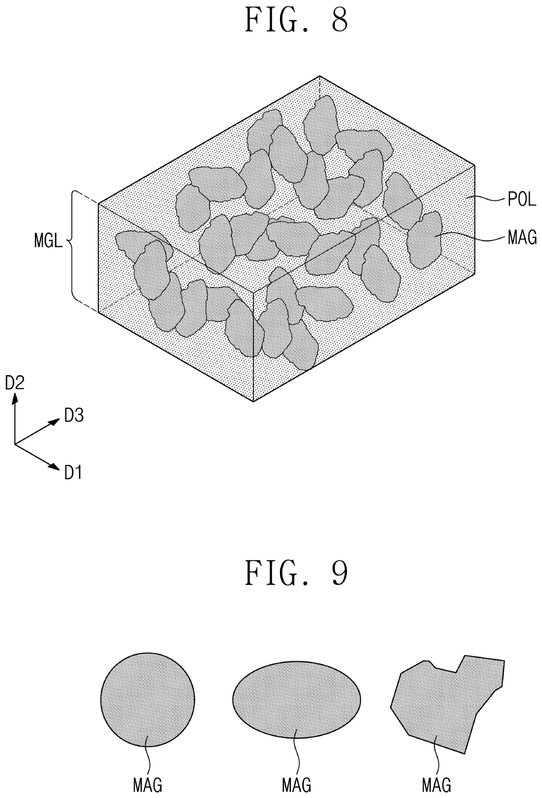

FIG. 8 illustrates a perspective view showing a magnetic layer of a composite substrate according to an example embodiment of the present disclosure. FIG. 9 illustrates a diagram showing particle shapes of a magnetic material according to an example embodiment of the present disclosure.

Referring to FIGS. 8 and 9, the magnetic material MAG in the magnetic layer MGL may be distributed regularly or irregularly. When the magnetic material MAG is distributed extremely or substantially irregularly, the magnetic layer MGL may be divided into a region where the magnetic material MAG is concentrated and a region where the magnetic material MAG is not concentrated. The example of the extreme or substantial irregular distribution is further discussed in detail below.

The magnetic material MAG in the magnetic layer MGL may have an irregular particle shape. For example, as illustrated in FIG. 9, the magnetic material MAG may have a substantially spherical, oval, polygonal, or any other suitable particle shape. The magnetic materials MAG having various particle shapes may be irregularly mixed in the magnetic layer MGL.

An average particle diameter ($D_{50}$) of the magnetic material MAG may range from $\geq 10\ \mu m$ to $\leq 500\ \mu m$.

A spacing distance between particles of the magnetic material MAG may be equal to or less than 5 $\mu$m, 1 $\mu$m, 500 nm, or 100 nm. The spacing distance may refer to a distance between an interface of a given particle and an interface of another particle most adjacent to the given particle. For example, when the spacing distance is zero, particles of two magnetic materials MAG that are targets for measurement may overlap each other. When a small spacing distance is provided between particles of the magnetic material MAG, an efficient magnetic field may be formed due to magnetic interaction between the particles. For example, adjacent particles may interact with each other to act as a single aggregation, and therefore may constitute a high-density magnetic material.

For example, the spacing distance may be determined as an average of at least 30 individual measurements of different particle pairs, using transmission electron microscopy (TEM) on a cross-sectional sample of the composite substrate. The cross-section may be prepared by microtoming, focused ion beam (FIB) milling, or other suitable techniques.

In an example embodiment of the present disclosure, the magnetic layer MGL may further include a binder. The binder may be configured to combine particles of the magnetic material MAG, and may reduce the spacing distance. For example, the binder may include at least one of polyester, nylon, polyphenylene sulfide (PPS), epoxy, polyvinylidene fluoride (PVDF), polytetrafluoroethylene (PTFE), or any combination thereof. Even when the magnetic layer MGL does not include the binder, particles of the magnetic material MAG may be brought sufficiently close to each other through a pressing process such as rolling in battery fabrication process.

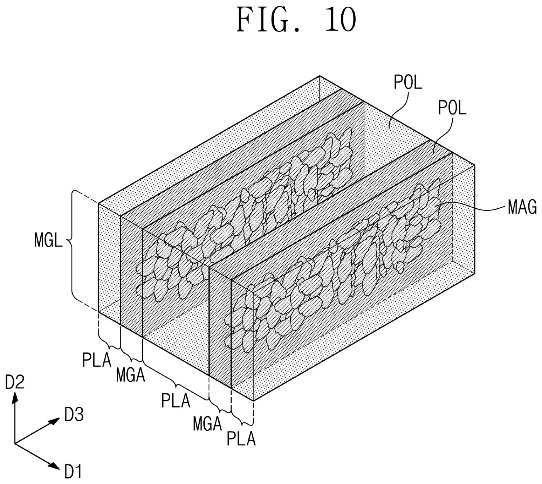

FIG. 10 illustrates a perspective view showing a magnetic layer including a magnetic region according to an example embodiment of the present disclosure. Referring to FIG. 10, the magnetic layer MGL according to an example embodiment of the present disclosure may include a magnetic region MGA and a polymeric region PLA.

The magnetic layer MGL may include a magnetic material MAG and a polymeric material POL. The magnetic region MGA may be an area where a ratio ($W_{MAG}/W_{MGA}$) of a weight $W_{MAG}$ of the magnetic material MAG in the magnetic region MGA to a total weight $W_{MGA}$ of the magnetic region MGA is equal to or greater than $\geq 50$ wt%.

The polymeric region PLA may include a magnetic material MAG and a polymeric material POL. The polymeric region PLA may be an area where a ratio ($W_{MAG}/W_{PLA}$) of a weight $W_{MAG}$ of the magnetic material MAG in the polymeric region PLA to a total weight $W_{PLA}$ of the polymeric region PLA is equal to or less than 20 wt%. An amount of the magnetic material MAG in the polymeric region PLA may be relatively small, and thus the magnetic material MAG may not be illustrated.

In an example embodiment of the present disclosure, the magnetic region MGA may be an area where an amount of the magnetic material MAG is equal to or greater than 1.5 times an amount of the magnetic material MAG in the polymeric region PLA.

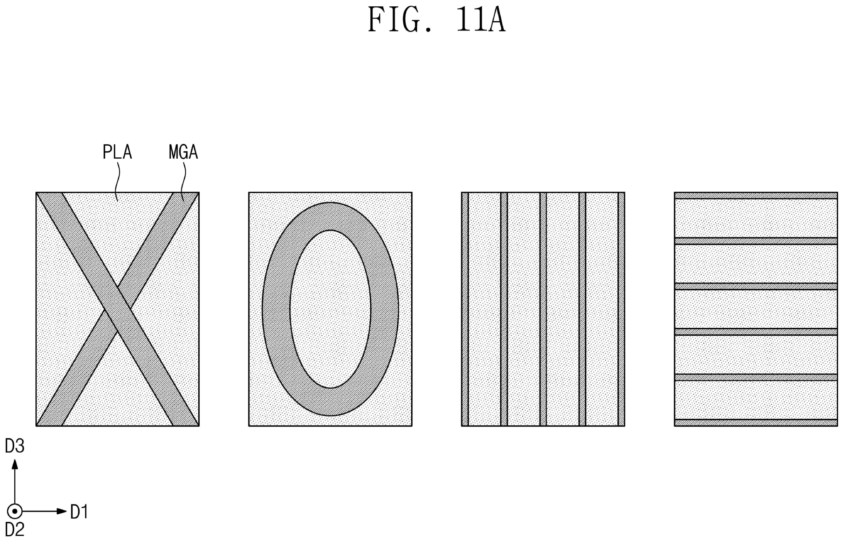

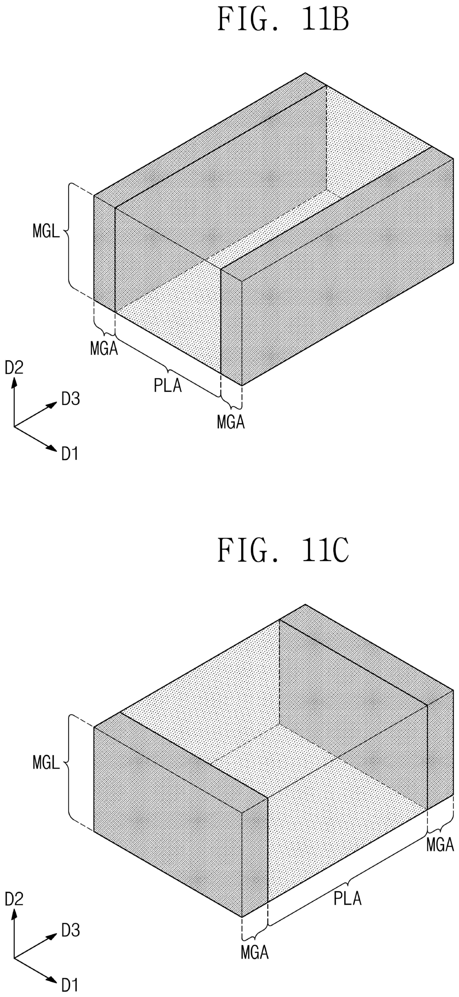

FIGS. 11A to 11C illustrate diagrams showing various examples of the magnetic region MGA in the magnetic layer MGL. The illustration of the magnetic material MAG is omitted. FIG. 11A is a plan view showing the magnetic layers MGL. FIGS. 11B and 11C are perspective views showing an example where the magnetic region MGA is present on at least one side part of the magnetic layer MGL.

In an example embodiment of the present disclosure, referring to FIG. 11A, the magnetic region MGA may be formed to have various shapes when necessary.

In an example embodiment, referring to FIGS. 11B and 11C, the magnetic region MGA may extend substantially parallel to a lengthwise direction (a third direction D3) of the magnetic layer MGL as illustrated in FIG. 11B. Alternatively, as shown in FIG. 11C, the magnetic region MGA may extend substantially parallel to a width direction (a first direction D1) of the magnetic layer MGL.

The "substantially parallel" means that:

(i) the axis of the magnetic region in the width direction is within $\pm 10$ degrees of the width axis of the magnetic layer, or
(ii) the axis of the magnetic region in the lengthwise direction is within $\pm 10$ degrees of the lengthwise axis of the magnetic layer.

For example, as described in FIG. 11B, the axis of the magnetic region MGA in the third direction D3 may be substantially parallel to the axis of the magnetic layer MGL in the third direction D3.

For example, as described in FIG. 11C, the axis of the magnetic region MGA in the first direction D1 may be substantially parallel to the axis of the magnetic layer MGL in the first direction D1.

The magnetic region MGA may be positioned on at least one side part of the magnetic layer MGL. The magnetic region MGA is illustrated to reside on opposite side parts of the magnetic layer MGL, but may be positioned on, e.g., only one side part of the magnetic layer MGL.

the side part is:

(i) a region within 0% to 30% from each end in the width direction of the magnetic layer, or
(ii) a region within 0% to 30% from each end in the lengthwise direction of the magnetic layer.

When the magnetic region MGA is positioned on at least one side part of the magnetic layer MGL, slippage between unit stacks may be effectively reduced or prevented in a stacking process.

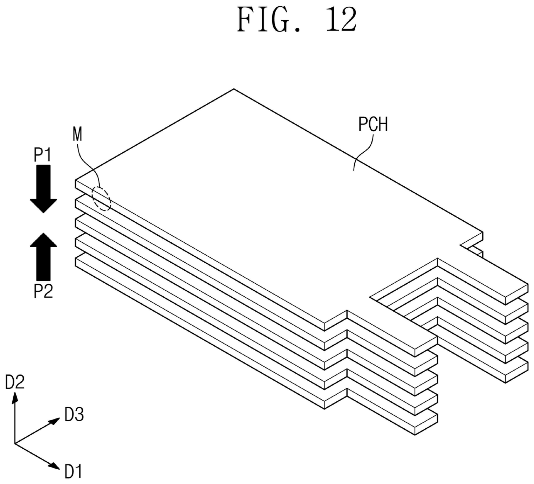

With reference to FIGS. 12 to 17, the following describes a role of the composite substrate CPS according to the present disclosure in a stacking process. The stacking process may be, for example, a process for stacking unit cells or unit pouch batteries.

FIG. 12 illustrates a diagram showing a stacked state of unit pouch batteries PCH according to an example embodiment of the present disclosure. The unit pouch battery PCH may include a pouch-type casing that houses an electrode assembly (see electrode assembly 40 of FIG. 4) in which 10 to 50 bi-cells BCL are stacked. The bi-cell BCL may include the composite substrate CPs discussed above with reference to FIG. 6. Referring to FIG. 12, adhesive forces P1 and P2 may be applied between the composite substrates CPS to improve an adhesive force between the stacked unit pouch batteries PCH.

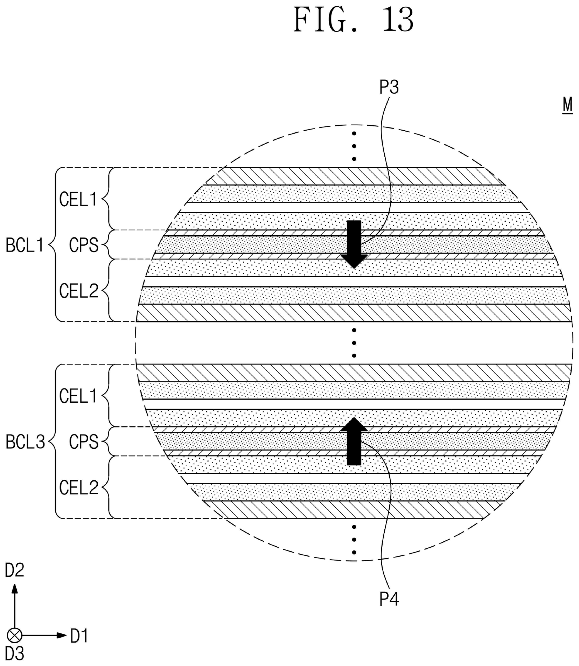

FIG. 13 is an enlarged view of the portion "M" depicted FIG. 12, showing a stacked state of the bi-cells BCL according to an example embodiment of the present disclosure. Referring to FIG. 13, adhesive forces P3 and P4 may be applied between the composite substrates CPS to improve an adhesive force between stacked bi-cells BCL1, BCL2, BCL3, and the like, and an adhesive force between the layers (see CPS, ACT1, 30, ACT2, and MES of FIG. 6) in the bi-cell BCL.

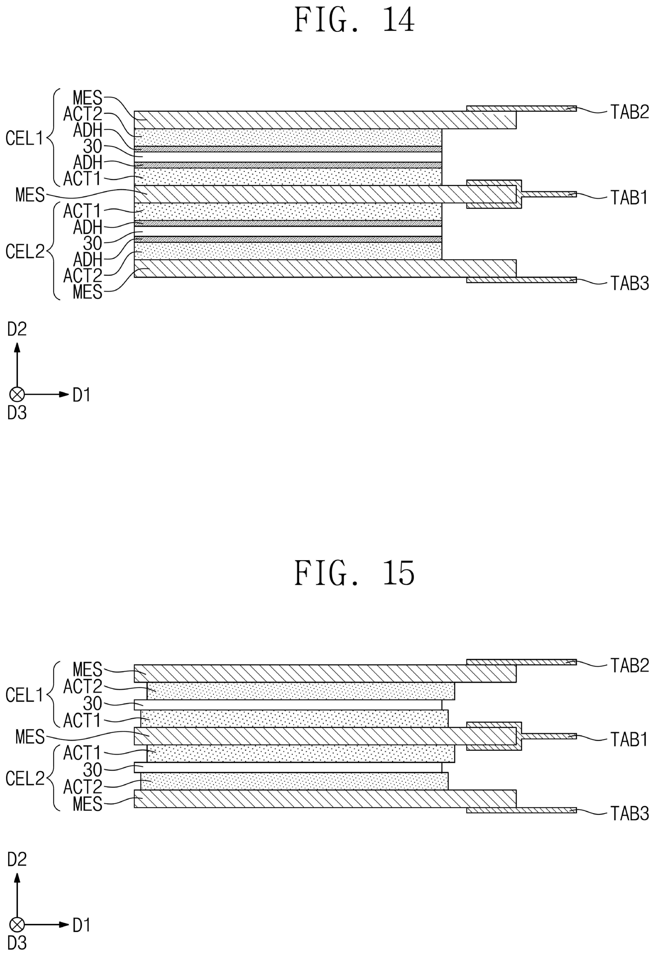

FIGS. 14 and 15 are comparative examples of the bi-cell BCL in which a metal substrate MES is included to substitute for the composite substrate CPS according to examples of the present disclosure.

Referring to FIG. 14, when the metal substrate MES is included, adhesive members ADH may be added to assist bonding between the layers ACT1, 30, and ACT2. The adhesive member ADH may include a tape, and may become a cause of side reactions during battery operation.

Referring to FIG. 15, when the adhesive members ADH are not added, side reactions during battery operation may be alleviated, but slippage between the layers ACT1, 30, ACT2, and MES in the direction D1 may induce a reduction in battery performance. For example, the ACT1, 30, ACT2, and MES may be slightly offset without being aligned with each other.

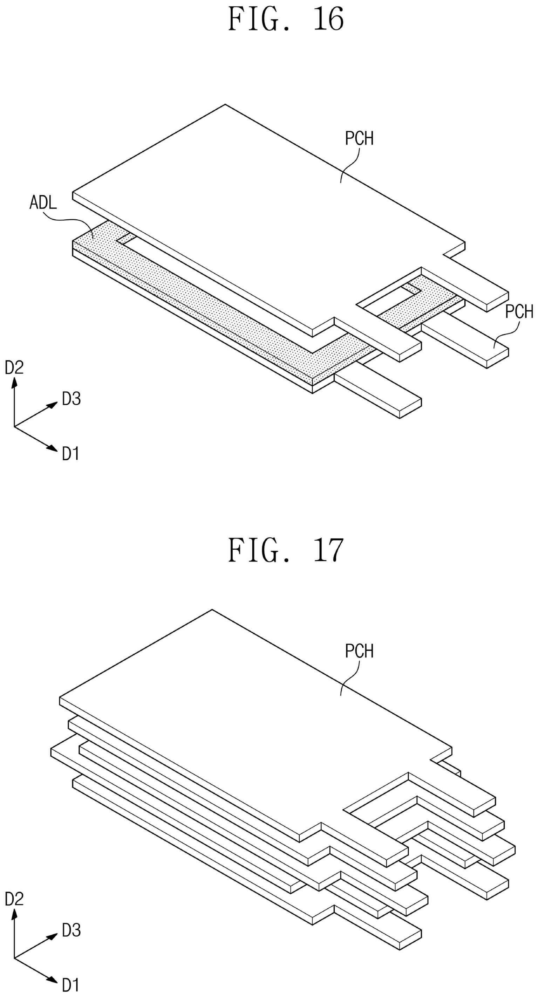

FIGS. 16 and 17 are comparative examples of the unit pouch battery PCH in which a metal substrate MES is included to substitute for the composite substrate CPS according to the present disclosure.

Referring to FIG. 16, when the metal substrate MES is included, an adhesive layer ADL may be added to assist adhesion between the unit pouch batteries PCH. The adhesive layer ADL may be formed on a side on one surface of a pouch battery. This configuration may generate a step difference which may induce side reactions during battery operation. In contrast, when the magnetic region MGA of the present disclosure is positioned on at least one side part of the magnetic layer MGL as discussed above, slippage between unit stacks in the D1 direction may be effectively reduced or prevented without side reactions.

Referring to FIG. 17, when the adhesive layer ADL is not added, it may be possible to alleviate side reactions caused by the adhesive layer ADL during battery operation, but slippage may occur in the D1 direction between the unit pouch batteries PCH, with the result that stacking stability may be reduced, which may lead to a decrease in battery performance.

The composite substrate CPS according to the present disclosure may secure a fixed position in a roll-to-roll process. The roll-to-roll process may be a process in which a first active material layer ACT1 is formed on top and bottom surfaces of the composite substrate CPS. When a magnet is added to a roll, the roll and the composite substrate CPS may be stably adhered to each other to reliably fix a position of the composite substrate CPS and to hinder or prevent the composite substrate CPS from slippage during process.

A rechargeable lithium battery according to examples of the present disclosure may include a positive electrode active material layer, an electrolyte, a negative electrode active material layer, and the composite substrate discussed above.

Any suitable substance or medium may be applicable without restriction as the electrolyte, as long as the substance is configured as a medium that allows movement of ions involved in electrochemical reactions of a battery. In an example embodiment, the electrolyte may be or include a liquid electrolyte or a solid electrolyte.

In an example embodiment, the liquid electrolyte may include the electrolyte ELL discussed above with reference to FIGS. 1 to 5.

In an example embodiment, the solid electrolyte may include a sulfide-based solid electrolyte. The sulfide-based solid electrolyte may include, for example, at least one of $Li_2S-P_2S_5$, $Li_2S-P_2S_5-LiX$ (where X is or includes a halogen element), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-$

$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is or includes at least one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes at least one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

A rechargeable lithium battery according to examples of the present disclosure may further include a separator, when necessary. For example, when a liquid electrolyte is included, it may be preferable to further include a separator.

A rechargeable lithium battery according to examples of the present disclosure may have a displacement in a range of $\geq 0.001\%$ to $\leq 10\%$, $\geq 0.001\%$ to $\leq 5\%$, $\geq 0.001\%$ to $\leq 3\%$, or $\geq 0.001\%$ to $\leq 1\%$.

With reference to FIG. 6, the following describes a displacement measuring method. A laser may be irradiated in a forward direction of a second direction D2 toward a side where ends of the layers MES, ACT2, 30, ACT1, MEL2, MGL, MEL1, ACT1, 30, ACT2, and MES of a stack are aligned side-by-side (e.g., a left end of the bi-cell depicted in FIG. 6). A detector for receiving the laser may be installed in a reverse direction of the second direction D2. The laser and the detector may substantially ceaselessly operate during a stacking process.

When a separation occurs during a stacking process or a roll-to-roll process, there may be a change in signal sensibility of the laser received by the detector. The change in signal sensibility may be recorded in real-time to calculate the number of separations and a separated area during a stacking process or a roll-to-roll process. The displacement may be calculated according to Equation 1 below. In Equation 1, a separated area may refer to a blocked area, or an area where the laser signal sensibility changes during the laser irradiation.

Equation 1:

$$\text{Displacement (\%)} = \{\text{separated area/total area}\} \times 100$$

An instrument for measuring the displacement may be, for example, AR700 commercially available from Acuity Laser Co. or Q5X series manufactured by Banner Engineering Co.

The rechargeable lithium battery according to an example embodiment of the present disclosure may be applied to, e.g., automotive vehicles, mobile phones, and/or any other electrical devices, but the present disclosure is not limited thereto.

The following describes some examples and comparative examples of the present disclosure. The following embodiments, however, are merely example, and the present disclosure is not limited to the example embodiments discussed below.

**Embodiment 1**

After neodymium and polyethylene were mixed and placed into a mold in the form of a film, the mixture was dried at 80°C and then subject to high-temperature pressing to form a magnetic layer. A weight ratio of neodymium and polyethylene was 95:5, a thickness of the magnetic layer was 10 $\mu$m, and a magnetic flux density was 1.2 T. As illustrated in FIG. 8, neodymium was uniformly disposed in the magnetic layer.

The magnetic layer was interposed between copper thin layers. A thickness of each of the copper thin layers was about 1 $\mu$m. A stack including the magnetic layer and the copper thin layers underwent a pressing process to manufacture a composite substrate. An average thickness of the composite substrate was about 12 $\mu$m.

**Embodiment 2**

A composite substrate was manufactured in the same method as in Embodiment 1, except that the magnetic layer was formed to include a magnetic region and a polymeric region. A detailed formation of the magnetic layer was as follows.

After neodymium and polyethylene were mixed and placed into a mold in the form of a film, the mixture was dried at 80°C and then subject to high-temperature pressing to form a magnetic layer. A weight ratio of neodymium and polyethylene was 95:5, a thickness of the magnetic layer was 10 $\mu$m, and a magnetic flux density was 1.2 T. As illustrated in FIG. 8, neodymium was uniformly disposed in the magnetic layer. The magnetic region and the polymeric region were arranged as illustrated in FIG. 11B.

**Comparative 1**

An ordinary substrate, or a copper thin layer of 12 $\mu$m in thickness, was prepared in place of the composite substrate.

## Comparative 2

A composite substrate was manufactured in the same method as in Embodiment 1, except that a magnetic layer only including polyethylene was formed.

## Comparative 3

A composite substrate was manufactured in the same method as in Embodiment 1, except that copper powder was used in place of neodymium.

## Fabrication of Rechargeable Lithium Battery

$LiNi_{0.91}Co_{0.07}Al_{0.02}O_2$ as a positive electrode active material, polyvinylidenefluoride as a binder, and ketjen black as a conductive material were mixed in a weight ratio of 97:2:1, and the mixture was dispersed in N-methylpyrrolidone to prepare a positive electrode active material slurry.
The slurry was coated on the composite substrate (or the ordinary substrate) of the examples and the comparative examples, dried at 110°C, and then pressed to manufacture a positive electrode.
Artificial graphite and silicon nano particles mixed in a weight ratio of 93:7 as a negative electrode active material, styrene-butadiene rubber (SBR) as a binder, and carboxymethyl cellulose (CMC) as a thickener were mixed in a weight ratio of 97:1:2, and the mixture was dispersed in distilled water to prepare a negative electrode active material slurry.
The negative electrode active material slurry was coated on the composite substrate (or the ordinary substrate) of the examples (Embodiments) and the comparative examples (Comparatives), dried at 100°C, and then pressed to manufacture a negative electrode.
The positive electrode, the negative electrode, and a polyethylene separator of 14 μm in thickness were assembled to manufacture an electrode assembly, and an electrolyte was introduced to fabricate a rechargeable lithium battery.

## Evaluation 1: Displacement

Displacements of the examples and the comparative examples were measured according to the displacement measuring method. A stacking process and a roll-to-roll process were each performed to measure the displacement in each process. The results are listed in Table 1 below.

## Evaluation 2: Lithium Precipitation

The rechargeable lithium battery according to the examples (Embodiments) and the comparative examples (Comparatives) was full charged at 0.7 C. The battery was dissembled to dismantle the negative electrode, and then lithium precipitation on a surface of the negative electrode was examined. When lithium was precipitated, it was marked as O, and when lithium was not precipitated, it was marked as X. The results are listed in Table 1.

[Table 1]

| | Displacement (%) | | Lithium precipitation Yes: O, No: X |
|---|---|---|---|
| | Stacking | Roll-to-roll | |
| Embodiment 1 | 0.8% | 1% | X |
| Embodiment 2 | 1% | 0.1% | X |
| Comparative 1 | 5% | 8% | O |
| Comparative 2 | 5% | 12% | O (slight amount) |
| Comparative 3 | 5% | 8% | O |

Referring to Table 1, it may be observed that the batteries according to the examples have a displacement that is less than the displacement of the battery according to the comparative examples. For example, it may be ascertained that the composite substrate according to the present disclosure exhibits a remarkably desired or improved effect in reducing or preventing slippage between members. It may be observed that lithium precipitation in the batteries according to the examples is less than lithium precipitation in the batteries according to the comparative examples. For example, it may be ascertained that the composite substrate according to the present disclosure improves battery performance.

A composite substrate for a rechargeable lithium battery according to an example embodiment of the present disclosure may include a magnetic material, and may thus reduce or prevent slippage between members in battery fabrication process. In addition, battery performance may be improved through a magnetic field generated from the magnetic material.

Although some example embodiments of the present disclosure have been discussed with reference to accompanying figures, it is understood that various changes in form and details may be made therein without departing from the spirit and scope of the present disclosure. It therefore is understood that the example embodiments described above are just illustrative but not limitative in all aspects.

**Claims**

1. A composite substrate (CPS) for a rechargeable lithium battery (100), the composite substrate (CPS) comprising:

   a first metal layer;
   a second metal layer; and
   a magnetic layer between the first metal layer and the second metal layer,
   wherein a ratio of the thickness of the magnetic layer to the thickness of the composite substrate (CPS) is in a range of $\geq 0.01$ to $\leq 0.9$,
   wherein the magnetic layer comprises a magnetic material and a polymeric material,
   wherein the magnetic material comprises at least one of neodymium (Nd), neodymium-iron-boron (NdFeB), ferrite, aluminum-nickel-cobalt (AlNiCo), samarium-cobalt (SmCo), and any combination thereof, and
   wherein a ratio of a weight of the magnetic material to a total weight of the magnetic layer is in a range of $\geq 10$ wt% to $\leq 96$ wt%.

2. The composite substrate (CPS) of claim 1, wherein the polymeric material comprises at least one of polyethylene (PE), polypropylene (PP), polyvinylidene chloride (PVDC), and polyethylene terephthalate (PET).

3. The composite substrate (CPS) of claim 1 or 2, wherein the thickness of the composite substrate (CPS) is in a range of $\geq 10$ $\mu$m to $\leq 500$ $\mu$m.

4. The composite substrate (CPS) of any of the claims 1 to 3, wherein:

   a magnetic flux density of the composite substrate (CPS) is in a range of $\geq 0.3$ T to $\leq 3$ T, and
   The magnetic flux density is measured at 25 °C using a Gaussmeter positioned at a distance of 1 mm to 10 cm from the outer surface of the composite substrate.

5. The composite substrate (CPS) of any of the claims 1 to 4, wherein:

   the magnetic material has an irregular particle shape including at least two or more of spherical, ellipsoidal, or polygonal forms,
   an average particle diameter of the magnetic material is in a range of $\geq 10$ $\mu$m to $\leq 500$ $\mu$m, and
   the average particle diameter is measured by a particle size analyzer.

6. The composite substrate (CPS) of any of the claims 1 to 5, wherein:

   the magnetic material has an irregular particle shape, and
   a spacing distance between particles of the magnetic material is equal to or less than 5 $\mu$m, and
   the spacing distance being defined as an average of at least 30 measurements of the shortest distance between adjacent magnetic particles, measured using transmission electron microscopy (TEM) on a cross-sectional sample.

7. The composite substrate (CPS) of any of the claims 1 to 6, wherein the magnetic layer comprises a magnetic region and a polymeric region,

   wherein an amount of the magnetic material in the magnetic region is greater than an amount of the magnetic material in the polymeric region,

wherein a ratio of a weight of the magnetic material in the magnetic region to a total weight of the magnetic region is equal to or greater than about 50 wt%, and
wherein the magnetic region is on at least one side part of the magnetic layer.

8. The composite substrate (CPS) of any of the claims 1, wherein:

The magnetic layer comprises a magnetic region and a polymeric region, the polymeric region being a region other than the magnetic region, and
A ratio of a weight of the magnetic material in the magnetic region to a total weight of the magnetic region is equal to or greater than $\geq$ 50 wt%.

9. The composite substrate (CPS) of claim 8, wherein:

The magnetic region extends substantially parallel to a width direction or to a lengthwise direction of the magnetic layer, and
The "substantially parallel" is:

(i) the axis of the magnetic region in the width direction is within $\pm$10 degrees of the width axis of the magnetic layer, or
(ii) the axis of the magnetic region in the lengthwise direction is within $\pm$10 degrees of the lengthwise axis of the magnetic layer.

10. The composite substrate (CPS) of claim 8 or 9, wherein:

The magnetic region is on at least one side part of the magnetic layer, and
wherein the" side part" is:

(i) a region within 0% to 30% from each end in the width direction of the magnetic layer, or
(ii) a region within 0% to 30% from each end in the lengthwise direction of the magnetic layer.

11. The composite substrate (CPS) of any of the claims 8 to 10, wherein a ratio of a weight of the magnetic material of the magnetic layer to a total weight of the magnetic layer is in a range of $\geq$ 10 wt% to $\leq$ 96 wt%.

12. The composite substrate (CPS) of any of the claims 1 to 11, wherein the polymeric material comprises at least one of polyethylene (PE), polypropylene (PP), polyvinylidene chloride (PVDC), and polyethylene terephthalate (PET).

13. The composite substrate (CPS) of any of the claims 1 to 12 wherein a magnetic flux density of the composite substrate (CPS) is in a range of $\geq$ 0.3 T to < 3 T.

14. A rechargeable lithium battery (100), comprising:

a positive electrode active material layer;
an electrolyte;
a negative electrode active material layer; and
the composite substrate (CPS) as claimed in any one of claims 1 to 13.

15. The rechargeable lithium battery (100) of claim 14, wherein a displacement is in a range of $\geq$ 0.001% to $\leq$ 10%.

# FIG. 1

# FIG. 2

FIG. 3

# FIG. 4

# FIG. 5

# FIG. 6

# FIG. 7

# FIG. 8

# FIG. 9

# FIG. 10

# FIG. 11A

PLA  MGA

D3
D1
D2

# FIG. 11B

MGL

MGA

PLA

MGA

D2

D3

D1

# FIG. 11C

MGL

MGA

PLA

MGA

D2

D3

D1

# FIG. 12

# FIG. 13

# FIG. 14

CEL1 {
MES
ACT2
ADH
30
ADH
ACT1
}

MES

CEL2 {
ACT1
ADH
30
ADH
ACT2
MES
}

TAB2

TAB1

TAB3

D2
D1
D3

# FIG. 15

CEL1 {
MES
ACT2
30
ACT1
}

MES

CEL2 {
ACT1
30
ACT2
MES
}

TAB2

TAB1

TAB3

D2
D1
D3

# FIG. 16

# FIG. 17

**EUROPEAN SEARCH REPORT**

| | Application Number |
| --- | --- |
| | EP 25 20 6227 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | CN 116 396 595 A (YANGZHOU NALI NEW MATERIAL TECH CO LTD) 7 July 2023 (2023-07-07) | 1-6, 11-15 | INV. H01M4/66 |
| A | * Preparation Example 1; paragraphs [0007], [0009], [0030], [0090], [0101], [0112] - [0113], [0158]; figure 2; example 1 * ----- | 7-10 | |
| A | CN 114 300 688 B (SHANGHAI ENJIE NEW MATERIAL TECH CO LTD) 16 January 2024 (2024-01-16) * paragraphs [0016], [0038]; figure 4A * ----- | 1-15 | |
| A | CN 221 282 156 U (SHENZHEN JINMEI NEW MATERIAL TECH CO LTD) 5 July 2024 (2024-07-05) * paragraph [0047]; figure 3 * ----- | 1-15 | |

| TECHNICAL FIELDS SEARCHED (IPC) |
| --- |
| H01M |

The present search report has been drawn up for all claims

| Place of search | Date of completion of the search | Examiner |
| --- | --- | --- |
| Munich | 27 March 2026 | Letilly, Marika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 6227

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | | Publication date | Patent family member(s) | | Publication date |
|---|---|---|---|---|---|
| CN 116396595 | A | 07-07-2023 | CN | 116396595 A | 07-07-2023 |
| | | | WO | 2024250343 A1 | 12-12-2024 |
| CN 114300688 | B | 16-01-2024 | CN | 114300688 A | 08-04-2022 |
| | | | WO | 2023123730 A1 | 06-07-2023 |
| CN 221282156 | U | 05-07-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020240144527